# EUROPEAN PATENT SPECIFICATION

(11) **EP 3 641 595 B1**
(45) Date of publication and mention of the grant of the patent: **04.08.2021**
(21) Application number: 18740883.6
(22) Date of filing: 06.06.2018
(51) Int. Cl.: A47C 7/02, B62J 1/00, B62J 1/08, B62J 1/10

(54) **SADDLE CHAIR AND METHOD FOR ADJUSTING THE MUTUAL DISTANCE OF THE SEAT BODIES OF THE SADDLE CHAIR**
SATTELSTUHL UND VERFAHREN ZUR EINSTELLUNG DES GEGENSEITIGEN ABSTANDES DER SITZKÖRPER DES SATTELSTUHLS
CHAISE-SELLE ET PROCÉDÉ DE RÉGLAGE DE LA DISTANCE MUTUELLE DES CORPS DE SIÈGE DE LA CHAISE-SELLE

(30) Priority: 21.06.2017 FI 20175586
(43) Date of publication of application: 29.04.2020
(73) Proprietor: Yeeside Oy, 70900 Toivala (FI)
(72) Inventor: PARVIAINEN, Mikko, 70870 Hiltulanlahti (FI)
(74) Representative: Salomäki, Juha Kari Ensio
(86) International application number: PCT/FI2018/050425
(87) International publication number: WO 2018/234621

(56) References cited:
- EP-B1- 1 367 922
- BR-A2- PI0 906 210
- US-B2- 7 976 102

## Description

The invention relates to a saddle chair, especially its seat part having two separate seat bodies and mechanism for assembling the saddle chair of the two seat bodies and a leg.

It is previously known from publication EP1367922B1 a chair comprising a saddle-shaped seat part constituting of two side parts between which a central opening is formed. The two side parts are gathered together by a screw and a nut. By opening the nut a side part can be released for adjusting the central opening.

Further, it is previously known from publication US7976102B2 a seat of two juxtaposed seat bodies, in an adjustable manner. The locking and the releasing of the seat bodies is realized by a pressing member.

The locking of the seat parts is unstable as the plain support rod and/or screw loosely contacts the seat parts and their supporting structures.

The prior art does not show any solutions for locking the seat parts such, that they cannot be moved in relation to each other by simply sitting on the chair with pressure toward the seat pieces and/or pressing with legs.

Further, the solutions of the prior art have problems with opening the lock. They sometimes necessitate hard pushing or punching for opening as the parts are over-tightened. In that case, the handle for opening is not easy to turn, and the users are not very satisfied as they need to use strength for the opening.

The problem of the prior art is solved by a saddle chair of the claim 1 and a method of claim 8 for adjusting the mutual distance of the seat bodies of the saddle chair.

The saddle chair of the invention comprises a first seat body including a first seat connection plate; a second seat body including a second seat connection plate, the second seat body being juxtaposed to the first seat body; a connecting assembly; a longitudinal body; a leg, extending from the lower surface of the connecting assembly. In the saddle chair of the invention the second seat connection plate includes a second hole through which the longitudinal body goes, wherein the measure of the second hole is essentially larger than or the same as the diameter of the longitudinal body.

The saddle chair of the invention is characterized in that there is a first wedge-like body connected to the upper end of the longitudinal body, the first wedge-like body including a slanted surface; and a second wedge-like body including a slanted surface and having its slanted surface against the slanted surface of the first wedge-like body; an eccentric shaft connected to the second wedge-like body; whereby adjusting the mutual distance between the first seat body and the second seat body is realizable by moving the second wedge-like body by pushing or pulling the eccentric shaft.

In the saddle chair of the invention the first seat connection plate may include a first hole on which the longitudinal body attaches. Further in the saddle chair, optionally, the first seat connection plate may be attached to the connecting assembly by screws or by welding.

In the saddle chair of the invention, the first seat connection plate includes a first hole through which the longitudinal body goes. Further in the saddle chair, optionally, the first hole on the first seat connection plate may have an essentially similar shape as the second hole on the second seat connection plate.

In the saddle chair of the invention, the longitudinal body may extend from the upper surface of the connecting assembly. Further, in the saddle chair of the invention, the longitudinal body may be a screw going through the first wedge-like body, the second seat connection plate and the first seat connection plate. Still further, the longitudinal body may attach by its screw threads to the connecting assembly.

Alternatively, in the saddle chair of the invention, the longitudinal body extending from the upper surface of the connecting assembly may be integrated as one solid entity with the connecting assembly and the first wedge-like body.

In one preferred embodiment of the invention, in the saddle chair, there is a plate 550, preferably of metal, connected to the first seat connection plate or the connecting assembly pressing toward the first wedge-like body.

In one further preferred embodiment of the invention, in the saddle chair, there is a handle connected to the eccentric shaft such, that the release of the handle pushes or pulls the eccentric shaft.

According to the invention, the method for adjusting the mutual distance of the seat bodies of the saddle chair is characterized in that the eccentric shaft is pushed such that the second wedge-like body moves such that the distance between the slanted surface of the second wedge-like body and the slanted surface of the first wedge-like body grows. Further, the second seat body or the first seat body is reset such that a favorable mutual distance between the first seat body or the second seat body and the second seat body or the first seat body is achieved. Still further, the eccentric shaft is pulled back such that the second wedge-like body moves back such that the slanted surface of the second wedge-like body touches the slanted surface of the first wedge-like body.

In the method of the invention, in the phase of resetting the second seat body or the first seat body also the first seat body or the second seat body may be reset.

In the following preferred embodiment for the invention are presented with reference to the attached figures, wherein:
- Fig. 1: shows a general overview of the seat part of the saddle chair of the invention
- Fig. 2: shows an exploded view of the seat part of the saddle chair of the invention
- Fig. 3: shows a side view of the saddle chair of the invention
- Fig. 4: shows a general overview of the saddle chair of the invention
- Fig. 5a): shows a side view of the basic structure of a first seat connection plate of the invention
- Fig. 5b): shows a side view of the basic structure of a second seat connection plate of the invention
- Fig. 5c): shows a detailed top view of the basic structure of a first seat connection plate of the invention
- Fig. 5d): shows a detailed top view of the basic structure of a second seat connection plate of the invention
- Fig. 6a): shows a side view of the first wedge-like body
- Fig. 6b): shows a side view of the second wedge-like body
- Fig. 6c): shows a top view of the first wedge-like body
- Fig. 6d): shows a top view of the second wedge-like body.

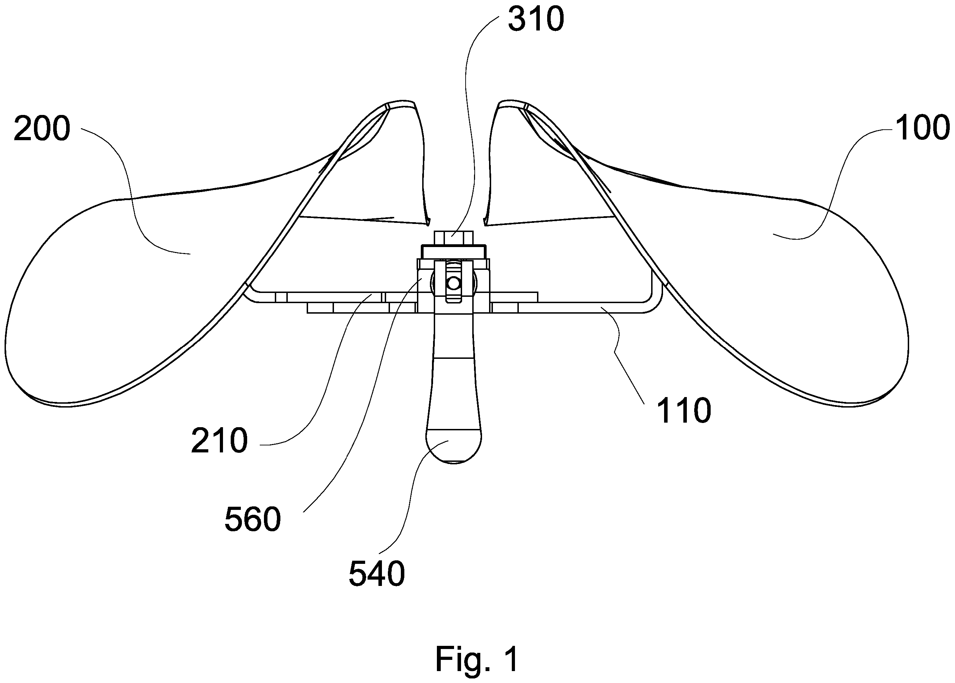

Figure 1 shows a general overview of the seat part of the saddle chair. According to the invention, the seat has a handle 540 for locking the seat connection plates 110 and 210 with the longitudinal body 310 and the wedge-like bodies.

The longitudinal body 310 may be e.g. a screw or a bolt and has in preferred embodiments an annular or round shape.

In a preferred embodiment, the longitudinal body 310 realized by a bolt, should not tightened over the normal tight connection achieved by turning by hand. Additionally, some gears may be used, but typically, they do not necessitate strength of the user.

To further improve the contacts between the surfaces of the seat connection plates it is possible to use friction tape, or any tape with surface having frictional features.

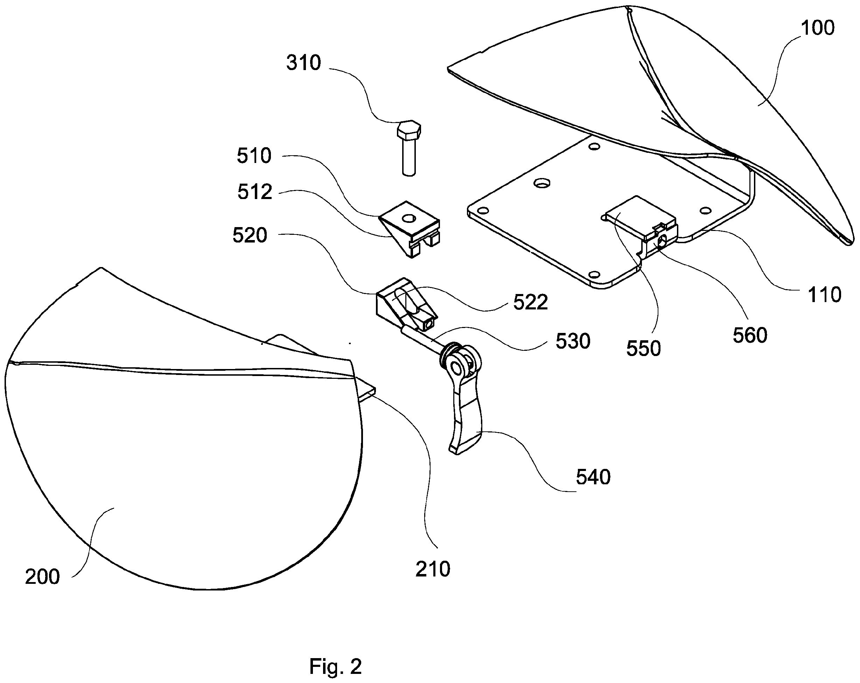

Figure 2 shows an exploded view of the seat part of the saddle chair. For the adjusting of the invention, the longitudinal body is assembled with the wedge-like bodies 510 and 520. The second wedge-like body is connected to an eccentric shaft 530, which moves as the handle 540 is turned. The separation of the slanted surfaces 512 and 522 of the wedge-like bodies 510 and 520 releases the second seat connection plate 210 which holds the second seat body 200. By moving the second seat connection plate 210 and the second seat body 200 in relation to the first seat connection plate 110 and the first seat body 100, the mutual distance between the seat bodies changes.

The holder 560 having a through hole for the eccentric shaft 530 is attached to the first seat connection plate 110.

In the embodiment with the fixed first seat connection plate 110, there is a metallic plate 550 connected to the first seat connection plate 110. The metallic plate 550 presses toward the wedge-like body 510 such that it cannot be slided off the wedge-like body 520 by twisting the longitudinal body 310 or by twisting the holder 560.

The plate 550 is preferably of a metal, but may also be manufactured of any other strong material.

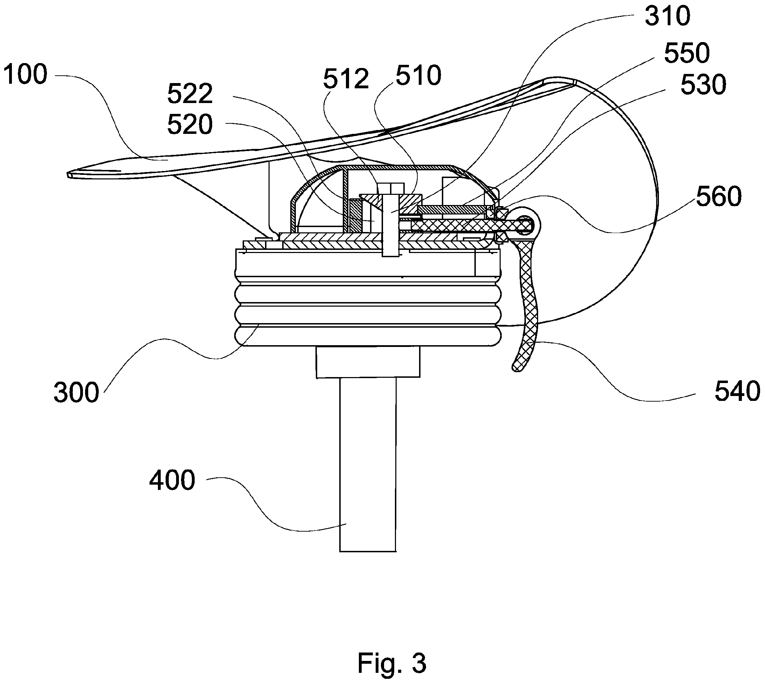

Figure 3 shows a side view of the saddle chair of the invention. The connecting assembly 300 holds the first seat connection plate 110 in a fixed manner, by e.g. screws or bolts, adhesive contacts or welding.

Alternatively, the connecting assembly 300 may be attached to the longitudinal body, and the first seat connection plate may have a hole 112, through which the longitudinal body (310) goes. By a hole 112 having a longitudinal shape, also the first seat body (100) may be adjustable.

Further, the connecting assembly 300 has connection to the leg 400 of the chair. The connection can be realized by an opening inserting the head of the leg.

A longitudinal body 310 extending of the connecting assembly 300 pieces together the wedge-like bodies 510 and 520 and the seat connection plates 210 and 110. By moving the second wedge-like body, the structure is released and the part locations can be adjusted. By losing the tight physical connection between the slanted surfaces 512 and 522, the assembly turns into an adjustable condition, wherein the seat connection plates 210 and 110 can be brought apart or closer to each other, according to the size and wishes of the chair user. The adjustable condition can be received by turning the handle 540 such that the eccentric shaft 530 moves toward the wedge-like body 520 and coincidently pushing the wedge-like body 520 such that the contact of the slanted surfaces 512 and 522 opens. As the wedge-like body 520 is slided such that the physical contact of the parts around the longitudinal body 310 is not tight anymore, the second seat connection plate 210 can be adjusted.

When adjusted, the seat connection plates 110 and 210 as well as wedge-like bodies 510 and 520 can be tightened back by turning the handle 540, which draws the eccentric shaft 530 back such that the second wedge-like body 520 tightens the structure around the longitudinal body 310.

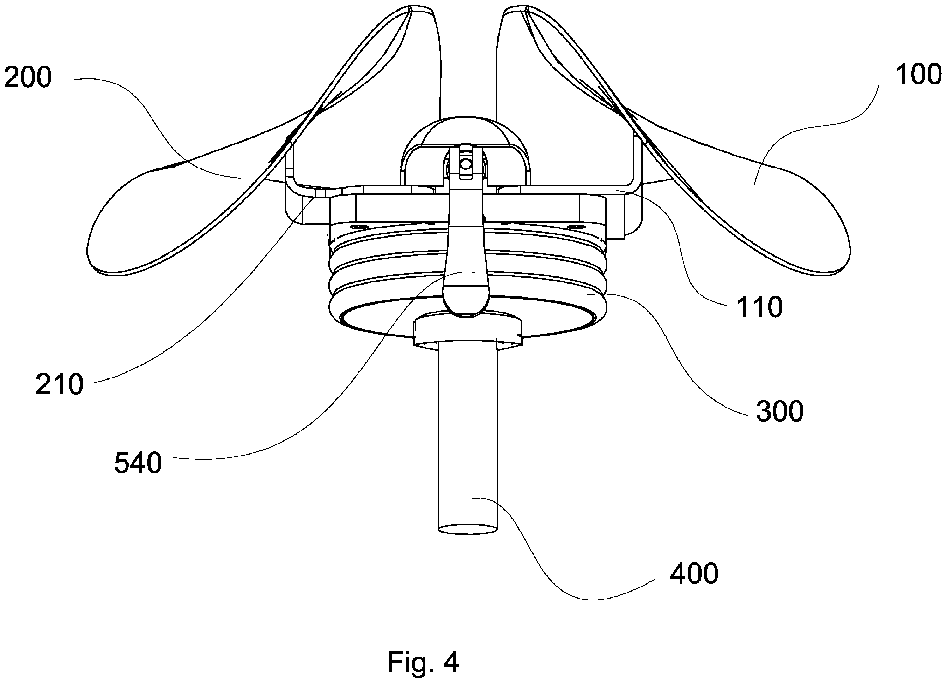

Figure 4 shows a general overview of the saddle chair. The seat bodies 100 and 200 are tightly fastened as the handle 540 is in down position. The down position tightens the wedge-like bodies 510 and 520 with the seat connection plates 110 and 210. The first seat connection plate 110 is connected to the connecting assembly 300 and further to the leg 400.

The first seat connection plate 110 may be attached to the connecting assembly e.g. by screws or by welding.

Further, the leg 400 of the saddle chair can be attached to a foot part, which may constitute of a base plate or a set of small feet, optionally with casters or similar for achieving a supportive standing on the base, e.g. ground or floor.

The connection of the leg 400 to the connecting assembly 300 may be manufactured e.g. with a conical sleeve, which locks on a conical seat of the connecting assembly 300. The leg may also be welded on the connecting assembly 300.

The seat bodies 100 and 200 preferably have a substantially semi-saddle shape constituting a saddle-like seat part when located side-by-side next to each other. The seat connection plates 110 and 210 have preferably an L-shaped profile such that the first end of the L-shape connects to the corresponding seat body and the second end of the L-shape connects to the connecting assembly 300 by a longitudinal body 310. In a normal usage, the seat bodies 100 and 200 raise higher than the connecting assembly 300.

Further, the seat bodies 100 and 200 may have different shapes constituting other kind of formulation for the seat part of the chair.

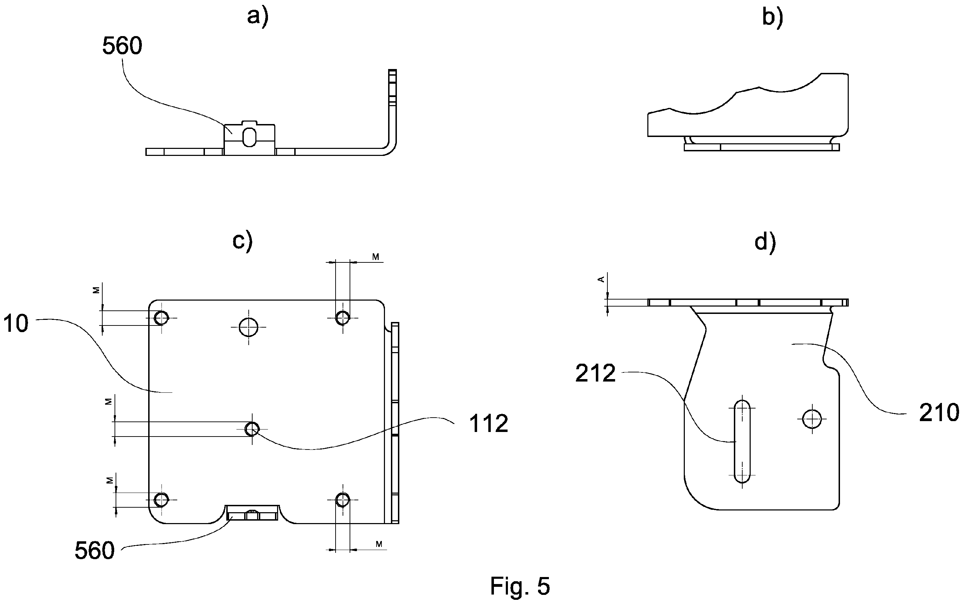

Figure 5a) shows a side view of the basic structure of a first seat connection plate 110 of the invention. The L-shaped piece includes an upward extending part for connection to the first seat body 100.

Figure 5b) shows a side view of the basic structure of a second seat connection plate of the invention. The upper part of the plate connects to the second seat body 200 to hold it in its position as adjusted.

Figure 5c) shows a detailed top view of the basic structure of a first seat connection plate 110 of the invention. The hole 112 is sized such that the longitudinal body 310 fits through it or in it. This means that the diameter of the hole 112 is essentially the same or larger than the diameter of the longitudinal body 310. Further, the first seat connection plate 110 may include holes with diameter M for attaching the plate onto the connecting assembly 300. A typical screw has the thread M8, and the thickness A of the seat connection plate is about 4mm. However, larger or smaller screws and thicker materials can be used as well.

The above mentioned thickness A of the seat connection plate is set because the need for screw threads for the longitudinal body implemented as a screw or a bolt. However, if welded, the need for attachment by the screw threads is not needed. In that case, the material thickness A may also be smaller than mentioned above.

With a through hole 112, the longitudinal body 310 may be attached to the connecting assembly 300. However, the longitudinal body 310 may not need to punch through the first seat connection plate 110, but it may stop on the first seat connection plate 110 and not attaching the connecting assembly. The hole 112 may not need to be a through hole, when the first seat connection plate 110 is attached to the connecting assembly 300 by further attachment.

Figure 5d) shows a detailed top view of the basic structure of a second connection plate 210 of the invention. The hole 212 is sized such that the longitudinal body 310 fits through it and is adjustable if the connection is not tight. The hole 212 is a sort of a guide slot allowing the passage of the longitudinal body 310.

For an annular or round longitudinal body 310, the hole 212 is in its ends preferably following the form of a half circle. However, by choosing a square-formed longitudinal body, also the hole 212 with angular shape is preferable. The essential feature in the formulation is that the guide slot works and guides the adjusting into right directions.

On the parts directing on the screws of the first seat connection plate 110, the second seat connection plate 220 may have forms, which ease the sliding of the seat connection plates in relation to each other. In the example of Fig. 5d), the curved shape assures that the movement of the second seat connection plate 210 stops on the corner screws of the first seat connection plate 110. Instead of screws also some other stoppers can be used.

Further, the rounded shape of the hole 212 and the longitudinal body 310 enables in addition to the sideward adjusting, also adjusting in a hinged or twisted direction such that the separation of the seat bodies 100 and 200 can be larger in the front or in the back.

It is still further embodiment of the invention, wherein the holes 112 and 212 are both through holes and formulated, contrary to the figures 5c) and 5d) such, that the hole 112 has a longitudinal form and the hole 212 has the basic round form. When such assembled, the second seat body 200 is fixed in its position in sideward direction, and the first seat body 100 is adjustable. Both parts can however, be rotated to find the optimal seat adjustment.

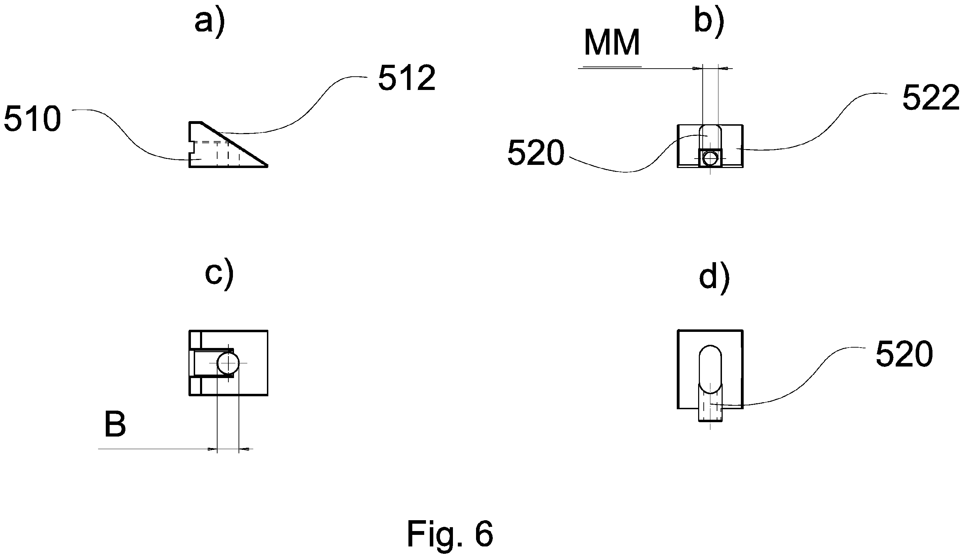

Figure 6a) shows a side view of the first wedge-like body 510. The slanted surface 512 has preferably substantially the same inclination as the slanted surface 522 of the second wedge-like body 522.

Figure 6b) shows a side view of the second wedge-like body 520, including a hole with dimension of MM, which typically correspond the measures of screw M6. The hole is sized such that the eccentric shaft 530 fits into it.

Figure 6c) shows a top view of the first wedge-like body 510, including a hole for the longitudinal body 310. In a preferred embodiment, the diameter B of the hole for the longitudinal body may be e.g. preferably 6-10 mm, more preferably 8-9 mm, and most preferably approximately 8.3 mm.

Figure 6d) shows a top view of the second wedge-like body 520.

In some preferred embodiments of the invention, the wedge-like bodies 510 and 520 may have length of 25-45 mm, preferably 30-40 mm, and most preferably approximately 35 mm. The corresponding height of the wedge-like bodies 510 and 520 may be 12-20 mm, preferably 15.5-17 mm, and most preferably approximately 16.3 mm. One optimal inclination for the slanted surfaces 512 and 522 may be e.g. 25-40°, preferably 31-35°, more preferably 32.9-33.1°, and most preferably 33°.

Irrespective to the above mentioned measures, the wedge-like bodies should be sized such that they are suitable in connection to the size of the whole seat composition. In this regard, in some assemblages, it may be advisable to use larger wedge-like bodies.

One optimal width of the wedge-like bodies 510 and 520 may be 15-35 mm, preferably 20-30 mm, and most preferably approximately 25 mm. However, the measures are always to be fixed with the while entity such, that the pieces fit into their places and provide a sufficient strength.

Further, the pieces of the construction may be manufactured e.g. of plastic.

Generally, the present invention is about a saddle chair with adjustable seat bodies 100 and 200 connected to seat connection plates 110 and 210. The parts are locked in their positions by means of wedge-like bodies 510 and 520 a longitudinal body 310 and an eccentric shaft 530. Additionally, a method for adjusting the saddle chair is claimed.

### Reference numbers:

- 100: first seat body
- 110: first seat connection plate
- 112: first hole
- 200: second seat body
- 210: second seat connection plate
- 212: second hole
- 300: connecting assembly
- 310: longitudinal body
- 400: leg
- 510: first wedge-like body
- 512: slanted surface
- 520: second wedge-like body
- 522: slanted surface
- 530: eccentric shaft
- 540: handle
- 550: (metallic) plate
- 560: holder

## Claims

1. A saddle chair, comprising:
a first seat body (100) including a first seat connection plate (110);
a second seat body (200) including a second seat connection plate (210), the second seat body (200) being juxtaposed to the first seat body (100);
a connecting assembly (300);
a longitudinal body (310);
a leg (400), extending from the lower surface of the connecting assembly (300);
wherein
the second seat connection plate (210) includes a second hole (212) through which the longitudinal body (310) goes, wherein the measure of the second hole (212) is essentially larger than or the same as the diameter of the longitudinal body (310);
**characterized in that**
there is a first wedge-like body (510) connected to the upper end of the longitudinal body (310), the first wedge-like body (510) including a slanted surface (512); and a second wedge-like body (520) including a slanted surface (522) and having its slanted surface (522) against the slanted surface (512) of the first wedge-like body (510);
an eccentric shaft (530) connected to the second wedge-like body (520);
whereby adjusting the mutual distance between the first seat body (100) and the second seat body (200) is realizable by moving the second wedge-like body (520) by pushing or pulling the eccentric shaft (530).

2. The saddle chair of claim 1, wherein the first seat connection plate (110) includes a first hole (112) on which the longitudinal body (310) attaches; and optionally, the first seat connection plate (110) is attached to the connecting assembly (300) by screws or by welding.

3. The saddle chair of claim 1, wherein the first seat connection plate (110) includes a first hole (112) through which the longitudinal body (310) goes; and optionally, the first hole (112) on the first seat connection plate (110) has an essentially similar shape as the second hole (212) on the second seat connection plate (210).

4. The saddle chair of claim 3, wherein the longitudinal body (310)
- extends from the upper surface of the connecting assembly (300);
- is a screw going through the first wedge-like body (510), the second seat connection plate (210) and the first seat connection plate (110); and
- attaches by its screw threads to the connecting assembly (300).

5. The saddle chair of claim 3, wherein the longitudinal body (310) extending from the upper surface of the connecting assembly (300) is integrated as one solid entity with the connecting assembly (300) and the first wedge-like body (510).

6. The saddle chair of any of the preceding claims, wherein there is a plate (550), preferably of metal, connected to the first seat connection plate (110) or the connecting assembly (300) pressing toward the first wedge-like body (510).

7. The saddle chair of any of the preceding claims, wherein there is a handle (540) connected to the eccentric shaft (530) such, that the release of the handle (540) pushes or pulls the eccentric shaft (530).

8. A method for adjusting the mutual distance of the seat bodies (100; 200) of the saddle chair of any of the preceding claims **characterized in that**:
- the eccentric shaft (530) is pushed such that the second wedge-like body (520) moves such that the distance between the slanted surface (522) of the second wedge-like body (520) and the slanted surface (512) of the first wedge-like body (510) grows;
- the second seat body (200) or the first seat body (100) is reset such that a favorable mutual distance between the first seat body (100) or the second seat body (200) and the second seat body (200) or the first seat body (100) is achieved;
- the eccentric shaft (530) is pulled back such that the second wedge-like body (520) moves back such that the slanted surface (522) of the second wedge-like body (520) touches the slanted surface (512) of the first wedge-like body (510).

9. The method of claim 8, wherein in the phase of resetting the second seat body (200) or the first seat body (100) also the first seat body (100) or the second seat body (200) is reset.

## Patentansprüche

1. Ein Sattelstuhl, umfassend:
einen ersten Sitzkörper (100) mit einer ersten Sitzanschlussplatte (110);
einen zweiten Sitzkörper (200) mit einer zweiten Sitzanschlussplatte (210), wobei der zweite Sitzkörper (200) an den ersten Sitzkörper (100) angrenzt;
eine Verbindungsbaugruppe (300);
einen Längskörper (310);
einen Schenkel (400), der sich von der unteren Fläche der Verbindungsbaugruppe (300) aus erstreckt; wobei die zweite Sitzanschlussplatte (210) ein zweites Loch (212) enthält, durch das der Längskörper (310) geht, wobei das Maß des zweiten Lochs (212) wesentlich größer als oder gleich dem Durchmesser des Längskörpers (310);
**dadurch gekennzeichnet, dass**
ein erster keilförmiger Körper (510) mit dem oberen Ende der Längskörper (310) verbunden ist, wobei der erste keilförmige Körper (510) eine schräge Fläche (512) aufweist; und
ein zweiter keilförmigen Körper (520) eine schräge Fläche (522) aufweist und dessen schräge Fläche (522) gegen die schräge Fläche (512) des ersten keilförmigen Körpers (510);
eine Exzenterwelle (530), die mit dem zweiten keilförmigen Körper (520) verbunden ist; wobei die Einstellung des gegenseitigen Abstandes zwischen dem ersten Sitzkörper (100) und dem zweiten Sitzkörper (200) durch Bewegen des zweiten keilförmigen Körpers (520) realisierbar ist durch Schieben oder Ziehen der Exzenterwelle (530).

2. Sattelstuhl nach Anspruch 1, wobei die erste Sitzverbindungsplatte (110) ein erstes Loch (112) aufweist, an dem der Längskörper (310) befestigt ist; und optional die erste Sitzverbindungsplatte (110) durch Schrauben oder durch Schweißen an der Verbindungsbaugruppe (300) befestigt ist.

3. Sattelstuhl nach Anspruch 1, wobei die erste Sitzverbindungsplatte (110) ein erstes Loch (112) aufweist, durch das der Längskörper (310) hindurchgeht; und optional hat das erste Loch (112) an der ersten Sitzverbindungsplatte (110) eine im Wesentlichen ähnliche Form wie das zweite Loch (212) an der zweiten Sitzverbindungsplatte (210).

4. Sattelstuhl nach Anspruch 3, wobei der Längskörper (310)
- sich von der oberen Fläche der Verbindungsbaugruppe (300) erstreckt;
- eine Schraube ist, die durch den ersten keilförmigen Körper (510), die zweite Sitzverbindungsplatte (210) und die erste Sitzverbindungsplatte (110) geht; und
- mit seinen Gewinden an der Anschlussbaugruppe (300) befestigt wird.

5. Sattelstuhl nach Anspruch 3, wobei der Längskörper (310), der sich von der oberen Fläche der Verbindungsbaugruppe (300) erstreckt, als eine feste Einheit mit der Verbindungsbaugruppe (300) und dem ersten keilförmigen Körper (510) integriert ist.

6. Sattelstuhl nach einem der vorhergehenden Ansprüche, wobei eine Platte (550), vorzugsweise aus Metall, mit der ersten Sitzanschlussplatte (110) oder der Verbindungsbaugruppe (300) verbunden ist, die gegen den ersten keilförmigen Körper (510) drückt.

7. Sattelstuhl nach einem der vorhergehenden Ansprüche, wobei ein Handgriff (540) mit der Exzenterwelle (530) verbunden ist, so dass das Loslassen des Handgriffs (540) die Exzenterwelle (530) schiebt oder zieht.

8. Verfahren zum Einstellen des gegenseitigen Abstandes der Sitzkörper (100; 200) des Sattelstuhls nach einem der vorhergehenden Ansprüche, **dadurch gekennzeichnet, dass**:
- die Exzenterwelle (530) so geschoben wird, dass sich der zweite keilartige Körper (520) so bewegt, dass der Abstand zwischen der schrägen Fläche (522) des zweiten keilartigen Körpers (520) und der schrägen Fläche (512) des ersten keilartigen Körpers (510) wächst;
- der zweite Sitzkörper (200) oder der erste Sitzkörper (100) so zurückgesetzt wird, dass ein günstiger gegenseitiger Abstand zwischen dem ersten Sitzkörper (100) oder dem zweiten Sitzkörper (200) und dem zweiten Sitzkörper (200) oder dem ersten Sitzkörper (100) erreicht wird;
- die Exzenterwelle (530) zurückgezogen wird, so dass sich der zweite keilartige Körper (520) zurückbewegt, so dass die abgeschrägte Fläche (522) des zweiten keilartigen Körpers (520) die abgeschrägte Fläche (512) des ersten keilartigen Körpers (510) berührt.

9. Verfahren nach Anspruch 8, wobei in der Phase des Zurücksetzens des zweiten Sitzkörpers (200) oder des ersten Sitzkörpers (100) auch der erste Sitzkörper (100) oder der zweite Sitzkörper (200) zurückgesetzt wird.

## Revendications

1. Tabouret selle de cheval, comprenant :
un premier corps de siège (100) comportant une première plaque de liaison de siège (110) ;
un second corps de siège (200) comportant une seconde plaque de liaison de siège (210), le second corps de siège (200) étant juxtaposé au premier corps de siège (100) ;
un ensemble liaison (300) ;
un corps longitudinal (310) ;
une jambe (400), s'étendant depuis la surface inférieure de l'ensemble liaison (300) ;
la seconde plaque de liaison de siège (210) comportant un second trou (212) à travers lequel passe le corps longitudinal (310), la mesure du second trou (212) étant essentiellement supérieure ou égale au diamètre du corps longitudinal (310) ;
**caractérisé en ce que**
il y a un premier corps en forme de trapèze (510) relié à l'extrémité supérieure du corps longitudinal (310), le premier corps en forme de trapèze (510) comportant une surface inclinée (512) ; et un second corps en forme de trapèze (520) comportant une surface inclinée (522) et ayant sa surface inclinée (522) contre la surface inclinée (512) du premier corps en forme de trapèze (510) ;
un arbre excentrique (530) relié au second corps en forme de trapèze (520) ;
grâce à quoi l'ajustement de la distance mutuelle entre le premier corps de siège (100) et le second corps de siège (200) est réalisable en déplaçant le second corps en forme de trapèze (520) en poussant ou en tirant l'arbre excentrique (530).

2. Tabouret selle de cheval selon la revendication 1, dans lequel la première plaque de liaison de siège (110) comporte un premier trou (112) sur lequel le corps longitudinal (310) se fixe ; et éventuellement, la première plaque de liaison de siège (110) est fixée à l'ensemble liaison (300) par vis ou par soudage.

3. Tabouret selle de cheval selon la revendication 1, dans lequel la première plaque de liaison de siège (110) comporte un premier trou (112) à travers lequel passe le corps longitudinal (310) ; et éventuellement, le premier trou (112) sur la première plaque de liaison de siège (110) a une forme essentiellement analogue à celle du second trou (212) sur la seconde plaque de liaison de siège (210).

4. Tabouret selle de cheval selon la revendication 3, dans lequel le corps longitudinal (310)
- s'étend depuis la surface supérieure de l'ensemble liaison (300) ;
- est une vis traversant le premier corps en forme de trapèze (510), la seconde plaque de liaison de siège (210) et la première plaque de liaison de siège (110) ; et
- se fixe par ses filetages de vis à l'ensemble liaison (300).

5. Tabouret selle de cheval selon la revendication 3, dans lequel le corps longitudinal (310) s'étendant depuis la surface supérieure de l'ensemble liaison (300) est intégré comme une seule entité solide avec l'ensemble liaison (300) et le premier corps en forme de trapèze (510).

6. Tabouret selle de cheval selon l'une quelconque des revendications précédentes, dans lequel il y a une plaque (550), de préférence en métal, reliée à la première plaque de liaison de siège (110) ou à l'ensemble liaison (300) se pressant vers le premier corps en forme de trapèze (510).

7. Tabouret selle de cheval selon l'une quelconque des revendications précédentes, dans lequel il y a une poignée (540) reliée à l'arbre excentrique (530) de telle sorte que la libération de la poignée (540) pousse ou tire l'arbre excentrique (530).

8. Procédé permettant de régler la distance mutuelle des corps de siège (100 ; 200) du tabouret selle de cheval selon l'une quelconque des revendications précédentes, **caractérisé en ce que** :
- l'arbre excentrique (530) est poussé de telle sorte que le second corps en forme de trapèze (520) se déplace de telle sorte que la distance entre la surface inclinée (522) du second corps en forme de trapèze (520) et la surface inclinée (512) du premier corps en forme de trapèze (510) se développe ;
- le second corps de siège (200) ou le premier corps de siège (100) est rajusté de telle sorte qu'une distance mutuelle favorable entre le premier corps de siège (100) ou le second corps de siège (200) et le second corps de siège (200) ou le premier corps de siège (100) est obtenue ;
- l'arbre excentrique (530) est tiré vers l'arrière de telle sorte que le second corps en forme de trapèze (520) recule de telle sorte que la surface inclinée (522) du second corps en forme de trapèze (520) touche la surface inclinée (512) du premier corps en forme de trapèze (510).

9. Procédé selon la revendication 8, dans lequel, lors de la phase de rajustement du second corps de siège (200) ou du premier corps de siège (100), le premier corps de siège (100) ou le second corps de siège (200) est également rajusté.
